# EUROPEAN PATENT SPECIFICATION

(11) **EP 4 149 147 B1**
(45) Date of publication and mention of the grant of the patent: **27.11.2024**
(21) Application number: 21824870.6
(22) Date of filing: 26.05.2021
(51) Int. Cl.: H04W 16/28

(54) **SIGNAL SENDING METHOD AND APPARATUS, AND ELECTRONIC DEVICE AND COMPUTER-READABLE STORAGE MEDIUM**
SIGNALSENDEVERFAHREN UND -VORRICHTUNG SOWIE ELEKTRONISCHE VORRICHTUNG UND COMPUTERLESBARES SPEICHERMEDIUM
PROCÉDÉ ET APPAREIL D'ENVOI DE SIGNAL, ET DISPOSITIF ÉLECTRONIQUE ET SUPPORT DE STOCKAGE LISIBLE PAR ORDINATEUR

(30) Priority: 15.06.2020 CN 202010543681
(43) Date of publication of application: 15.03.2023
(73) Proprietor: ZTE Corporation, Shenzhen, Guangdong 518057 (CN)
(72) Inventor: WEI, Hao, Shenzhen, Guangdong 518057 (CN); MOU, Haining, Shenzhen, Guangdong 518057 (CN); MAO, Huanhuan, Shenzhen, Guangdong 518057 (CN); LI, Jie, Shenzhen, Guangdong 518057 (CN)
(74) Representative: Canzler & Bergmeier Patentanwälte Partnerschaft mbB
(86) International application number: PCT/CN2021/096052
(87) International publication number: WO 2021/254115

(56) References cited:
- WO-A1-2020/085723
- CN-A- 106 358 216
- CN-A- 108 024 359
- CN-A- 108 352 874
- CN-A- 109 219 062
- CN-A- 110 583 093
- US-A1- 2020 187 258
- US-A1- 2022 330 328
- EMAIL DISCUSSION RAPPORTEUR (ZTE): "Procedures and mgsB content [105bis#30][NR/2-step RACH]", 3 May 2019, 3GPP DRAFT; R2-1906308, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, PAGE(S) 1 - 91, XP051710625

## Description

### TECHNICAL FIELD

Embodiments of the present disclosure relate to the technical field of communications.

### BACKGROUND

When transmitting a data signal to a base station from a terminal, the terminal may select any one of the received beams from the base station to transmit the data signal.

### SUMMARY

In one aspect, an embodiment of the present disclosure provides a signal transmission method, including: receiving at least one beam signal from a base station, wherein each of the at least one beam signal corresponds to a respective one beam; transmitting, in response to a first beam signal with a quality satisfying a first quality condition included in the at least one received beam signal, a verification signal and a data signal to the base station using a first beam corresponding to the first beam signal, wherein the verification signal is used by the base station to verify an identity of a terminal; selecting, in response to no first beam signal with the quality satisfying the first quality condition included in the at least one received beam signal, a second beam signal from the at least one received beam signal, and transmitting the verification signal to the base station using a second beam corresponding to the second beam signal; and transmitting, in response to receiving the first beam signal with the quality satisfying the first quality condition during a first time period after the verification signal is transmitted to the base station using the second beam corresponding to the second beam signal, the verification signal and the data signal to the base station using the first beam corresponding to the first beam signal; and transmitting, in response to not receiving the first beam signal with the quality satisfying the first quality condition during the first time period after the verification signal is transmitted to the base station using the second beam corresponding to the second beam signal, the data signal to the base station using the second beam corresponding to the second beam signal.

In another aspect, an embodiment of the present disclosure provides a signal transmission device, including: a receiving module configured to receive at least one beam signal from a base station, wherein each of the at least one beam signal corresponds to a respective one beam; a first transmitting module configured to transmit, in response to a first beam signal with a quality satisfying a first quality condition included in the at least one received beam signal, a verification signal and a data signal to the base station using a first beam corresponding to the first beam signal, wherein the verification signal is used by the base station to verify an identity of a terminal; a second transmitting module configured to select, in response to no first beam signal with the quality satisfying the first quality condition included in the at least one received beam signal, a second beam signal from the at least one received beam signal, and transmit the verification signal to the base station using a second beam corresponding to the second beam signal; and a third transmitting module configured to transmit, in response to receiving the first beam signal with the quality satisfying the first quality condition during a first time period after the verification signal is transmitted to the base station using the second beam corresponding to the second beam signal, the verification signal and the data signal to the base station using the first beam corresponding to the first beam signal; and transmit, in response to not receiving the first beam signal with the quality satisfying the first quality condition during the first time period after the verification signal is transmitted to the base station using the second beam corresponding to the second beam signal, the data signal to the base station using the second beam corresponding to the second beam signal.

In still another aspect, an embodiment of the present disclosure provides an electronic apparatus, including: one or more processors; a memory having one or more programs stored thereon which, when executed by the one or more processors, cause the one or more processors to implement at least one operation of the signal transmission method according to the embodiments of the present disclosure; and one or more I/O interfaces connected between the one or more processors and the memory, and configured to enable signal interaction between the one or more processors and the memory.

In yet another aspect, an embodiment of the present disclosure provides a computer-readable storage medium storing a computer program thereon which, when executed by a processor, causes the processor to implement at least one operation of the signal transmission method according to the embodiments of the present disclosure.

### BRIEF DESCRIPTION OF DRAWINGS

FIG. 1 is a flowchart illustrating a signal transmission method according to an embodiment of the present disclosure.
FIG. 2 is another flowchart illustrating a signal transmission method according to an embodiment of the present disclosure.
FIG. 3 is a block diagram illustrating a signal transmission device according to an embodiment of the present disclosure.
FIG. 4 is a block diagram illustrating an electronic apparatus according to an embodiment of the present disclosure.
FIG. 5 is a block diagram illustrating a computer-readable storage medium according to an embodiment of the present disclosure.

### DETAIL DESCRIPTION OF EMBODIMENTS

In order to make those skilled in the art better understand the technical solutions in the embodiments of the present disclosure, the following describes the signal transmission method and device, the electronic apparatus, and the computer-readable storage medium provided in the embodiments of the present disclosure in detail with reference to the accompanying drawings.

Embodiments of the present disclosure will be described more sufficiently below with reference to the accompanying drawings, which may be embodied in different forms and should not be construed as being limited to the embodiments set forth herein. Rather, these embodiments are provided so that the present disclosure will be thorough and complete, and will fully convey the scope of the present disclosure to those skilled in the art.

Accompanying drawings are provided for further understanding of the embodiments of the present disclosure and constitute a part of the specification. Hereinafter, these drawings are intended to explain the present disclosure together with the following embodiments, but should not be considered as a limitation to the present disclosure. The above and other features and advantages will become more apparent to those skilled in the art through detailed description of the exemplary embodiments with reference to the accompanying drawings.

Embodiments of the present disclosure may be described with reference to plan and/or sectional views in idealized representations of the present disclosure. Accordingly, the example illustrations may be modified in accordance with manufacturing techniques and/or tolerances.

The possible implementations of the present disclosure and features thereof may be combined with each other as long as they are not contradictory.

The terminology used herein is for the purpose of describing specific embodiments only and is not intended to limit the present disclosure. As used herein, the term "and/or" includes any and all combinations of one or more of the associated listed items. As used herein, the singular forms "a," "an," and "the" are intended to include the plural forms as well, unless the context clearly indicates otherwise. As used herein, the terms "comprise" and "consist of ..." specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used in the present disclosure have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined in the present disclosure.

The embodiments of the present disclosure are not limited to the embodiments shown in the drawings, but further include modifications of configurations formed based on a manufacturing process. Thus, the regions illustrated in the figures have schematic properties, and the shapes of the regions shown in the figures illustrate specific shapes of regions of elements, but are not intended to be limitative.

A terminal may select any one of the received beams from the base station to transmit a data signal. If the data signal is transmitted using a beam corresponding to a certain one of the currently received beam signals, although the terminal can immediately transmit the data signal to the base station, a parsing error of the data signal by the base station may occur if the beam has a poor quality. If the terminal waits for a beam with a better quality, although the probability of correctly parsing the data signal by the base station after receiving the data signal will be greatly increased, a certain latency has to be endured.

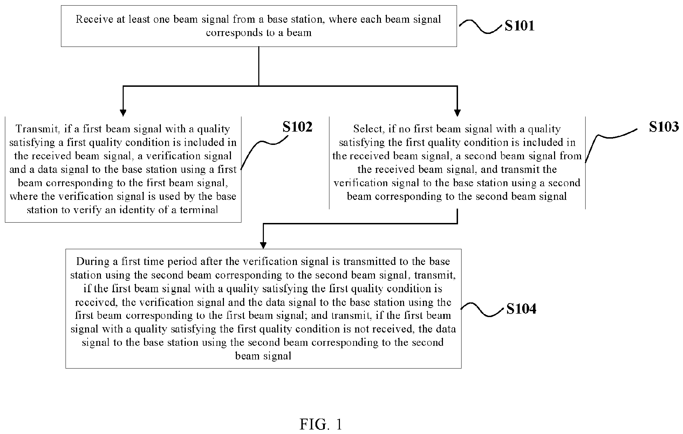

An embodiment of the present disclosure provides a signal transmission method. In FIG. 1, a flowchart illustrating a signal transmission method according to an embodiment of the present disclosure is shown. The method may be applied to a terminal for transmitting a data signal to a base station, and may be embodied on devices and chips such as a digital signal processor (DSP), a field programmable gate array (FPGA), and/or an application specific integrated circuit (ASIC). The signal transmission method may include operations S101 to S104.

At operation S101, at least one beam signal from a base station is received, where each beam signal corresponds to a beam.

A terminal (e.g., a mobile phone, etc.) receives beam signals (e.g., synchronization signal and physical broadcast channel (PBCH) block (SSB) signals) from a base station, where the beam signals are signals carried on beams periodically transmitted in different directions from the base station. In other words, the beam signals and the beams are in one-to-one correspondence.

The base station transmits beams carrying beam signals in fixed and different directions within a slot. In this operation, the received beam signal(s) is(are) a beam signal(s) transmitted from the base station in a same slot, which have different beam attenuations in different directions due to the influence of environment and other factors. As a result, the terminal may receive merely one beam signal from the base station, or may receive a plurality of beam signals of different qualities from different directions.

At operation S102, if a first beam signal with a quality satisfying a first quality condition is included in the received beam signal, a verification signal and a data signal is transmitted to the base station using a first beam corresponding to the first beam signal, where the verification signal is used by the base station to verify an identity of a terminal.

After receiving the beam signal transmitted from the base station, the terminal assesses the quality of the received beam signal. If there is a beam signal with a quality satisfying a first quality condition in the received beam signal, the beam signal is determined as the first beam signal, and corresponds to the first beam. The verification signal and the data signal are transmitted to the base station using the beam (i.e., the first beam) corresponding to the beam signal. The verification signal carries verification information to be used by the base station to verify an identity of the terminal, and the data signal carries data (such as service data) to be transmitted from the terminal to the base station.

Since the beam signal is transmitted to the terminal via a beam, a quality of the beam (such as an attenuation degree of the beam) can be detected through a quality of the beam signal. The better the quality of the beam used, the better the quality of the data signal transmitted to the base station. Therefore, the quality of the verification signal and the data signal received by the base station will be better when transmitted with a beam corresponding to a beam signal of a better quality.

If more than one beam signals received by the terminal from the base station have a quality satisfying the first quality condition, the terminal may select one of the beam signals with the best quality as the first beam signal, or may stop assessing the quality of other beam signals when firstly detecting a beam signal with a quality satisfying the first quality condition, and directly use that beam signal as the first beam signal.

The terminal may transmit the verification signal and the data signal to the base station in two modes (respectively referred to as a first mode and a second mode for convenience of description). The first mode includes directly transmitting the data signal after the verification signal is transmitted, and then receiving a feedback signal from the base station to complete the process of accessing to the base station by the terminal, which is also called "two-step access". The second mode includes waiting for a feedback signal from the base station after transmitting the verification signal, and transmitting, after the feedback signal is received, the data signal to the base station using the first beam, and waiting for a second feedback signal from the base station to complete the process of accessing to the base station by the terminal, which is also called "four-step access".

In other words, the method provided in the embodiments of the present disclosure may be applied to both "two-step access" and "four-step access".

At operation S103, selecting, if no first beam signal with a quality satisfying the first quality condition is included in the received beam signal, a second beam signal from the received beam signal, and transmitting the verification signal to the base station using a second beam corresponding to the second beam signal.

After assessing the quality of the received beam signal, if the terminal finds that there is no beam signal with a quality satisfying the first quality condition in the received beam signal, that is, no beam signal can be used as the first beam signal, a beam signal is selected from the received signal and used as the second beam signal, and a beam (that is, the second beam) corresponding to that beam signal is used to transmit the verification signal to the base station, while the data signal is not transmitted for the moment.

At operation S104, transmitting, if the first beam signal with a quality satisfying the first quality condition is received during a first time period after the verification signal is transmitted to the base station using the second beam corresponding to the second beam signal, the verification signal and the data signal to the base station using the first beam corresponding to the first beam signal; and transmitting, if the first beam signal with a quality satisfying the first quality condition is not received during the first period, the data signal to the base station using the second beam corresponding to the second beam signal.

After the terminal transmits the verification signal to the base station using the second beam, the base station does not stop transmission of periodical beam signals to the terminal, while the terminal continuously receives beam signals transmitted from the base station. If the terminal receives a beam signal satisfying the first quality condition within the first time period, that beam signal is taken as the first beam signal, and the verification signal and the data signal are transmitted to the base station using the beam (i.e., the first beam) corresponding to the first beam signal. If the terminal does not receive a beam signal satisfying the first quality condition within the first time period, the data signal is further transmitted to the base station using the second beam.

In operation S103, if the terminal transmits the verification signal to the base station in two-step access, since the data signal is not transmitted, the terminal will not receive the feedback signal from the base station, and thus the complete access process cannot be finished. The terminal receives other beam signals from the base station. If the first beam signal satisfying the first quality condition is not received within the first time period, the verification signal is not desired to be transmitted to the base station now. Then, the data signal is transmitted to the base station using the second beam, and the access process can be finished when the feedback signal from the base station is received.

Similar to the mode of transmitting the verification signal to the base station in two-step access, if the terminal transmits the verification signal to the base station in four-step access, although the first feedback from the base station may be received, the complete access process cannot be finished since the data signal is not further transmitted to the base station. The terminal receives other beam signals from the base station. If the first beam signal satisfying the first quality condition is not received within the first time period, the verification signal is not desired to be transmitted to the base station now. Then, the data signal is transmitted to the base station using the second beam, and the access process can be finished when the feedback signal from the base station is received.

Apparently, if the first beam signal satisfying the first quality condition is received within the first time period, either transmitting the verification signal to the base station in two-step access or four-step access, the terminal is desired to re-transmit the verification signal, and transmit the data signal, to the base station using the first beam.

According to the signal transmission method provided in the embodiments of the present disclosure, when a beam signal transmitted from the base station is received, the quality of the beam is assessed through the beam signal. If there is a beam with a better quality now, the verification signal and the data signal are directly transmitted using the beam. If there is no beam with a better quality now, the verification signal is firstly transmitted to the base station using another beam, and the terminal further receives beam signals transmitted from the base station within a certain time period, while judging whether there is a beam with a better quality in the beams corresponding to the newly received beam signals. If there is a beam with a better quality, the verification signal and the data signal are transmitted using that beam with a better quality, and if there is no beam with a better quality, the data signal is continued to be transmitted to the base station using the previous beam without transmitting the verification signal. Therefore, when a better beam is present at the beginning, the beam with a better quality is directly selected to transmit the verification signal and the data signal, and the data signal is transmitted with a good quality and no latency. When no better beam is present at the beginning, the verification signal is firstly transmitted using a beam with a second best quality in the currently received beams. If a beam with a better quality is received in a short time, the beam with the better quality is directly used, and the data signal is transmitted with a good quality and a short latency. If there is no beam with a better quality for a short time, the data signal is further transmitted using the beam with a second best quality, which corresponds to selecting to transmit the data signal using the beam with the best quality under the condition of a short latency.

In an implementation, selecting the second beam signal from the received beam signal in operation S103 may include: selecting, from the received beam signal, a beam signal with the best quality as the second beam signal.

After assessing the quality of the received beam signal, if the terminal finds that there is no beam signal with a quality satisfying the first quality condition in the received beam signal, that is, no beam signal can be used as the first beam signal, a beam signal with the best quality is selected from the received signal and used as the second beam signal, and a beam (that is, the second beam) corresponding to that beam signal is used to transmit the verification signal to the base station, while the data signal is not transmitted for the moment.

According to the signal transmission method provided in the embodiments of the present disclosure, when there is no first beam signal, the terminal uses the second beam signal with the best quality in the current beam signals, that is, selects the beam with the best quality in the current beams, so as to ensure the signal quality as much as possible.

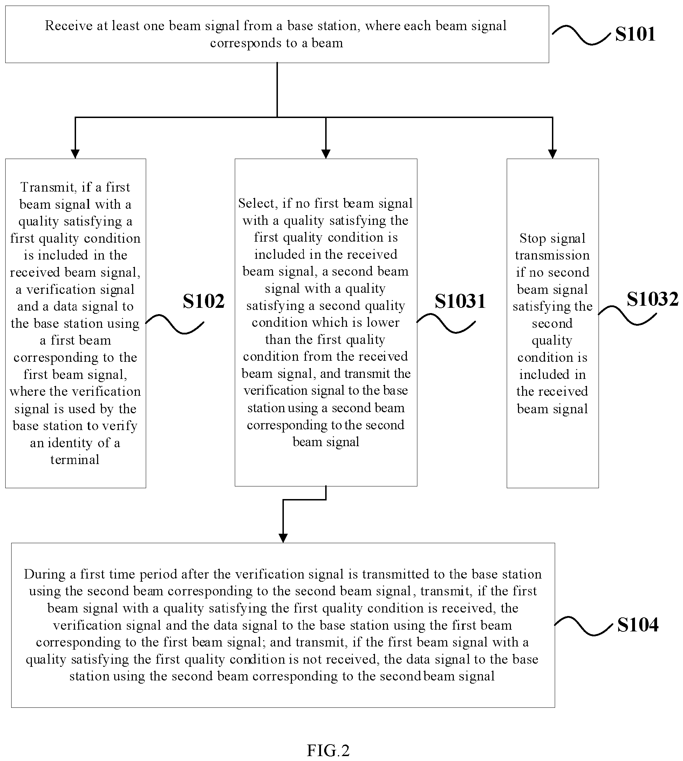

In an implementation, referring to FIG. 2, another flowchart illustrating a signal transmission method according to an embodiment of the present disclosure is shown, and selecting the second beam signal from the received beam signal in operation S103 may include operations S1031 and S1032.

At operation S1031, a second beam signal with a quality satisfying a second quality condition which is lower than the first quality condition is selected from the received beam signal.

After assessing the quality of the received beam signal, if the terminal finds that there is no beam signal with a quality satisfying the first quality condition in the received beam signal, that is, no beam signal can be used as the first beam signal (i.e., no beam has a "good" quality), a beam signal has a quality satisfying the second quality condition (apparently lower than the first quality condition) is selected from the received signal (i.e., a beam with a "not bad" quality is selected) and used as the second beam signal, and a beam (that is, the second beam) corresponding to that beam signal is used to transmit the verification signal, while the data signal is not transmitted for the moment.

Apparently, there may be more than one beam signals received by the terminal from the base station which have a quality satisfying the second quality condition, and the terminal may select one of the beam signals with the best quality as the second beam signal.

According to the signal transmission method provided in the embodiments of the present disclosure, when there is no first beam signal, the terminal may use a beam signal satisfying the second quality condition as the second beam signal, so that it can be ensured that the quality of the selected beam signal satisfies at least the second quality condition. Therefore, it is ensured that the beam used for transmitting information has an at least "not bad" quality, thereby avoiding that the data signal cannot be correctly received and processed due to the fact that a beam corresponding to a beam signal with a bad quality is used for transmitting the data signal.

At operation S1032, stopping signal transmission if no second beam signal satisfying the second quality condition is included in the received beam signal.

After assessing the quality of the received beam signal, if the terminal finds that there is no beam signal (i.e., the first beam signal) with a quality satisfying the first quality condition, and no beam signal with a quality satisfying the second quality condition (apparently lower than the first quality condition) in the received beam signal, none of the beams corresponding to the currently received beam signals is selected to transmit the verification signal, and the terminal waits for beam signals transmitted from the base station in a next cycle.

In this manner, it can be ensured that the terminal finally uses a beam corresponding to a beam signal with a quality satisfying a certain condition to transmit the data signal, thereby avoiding incorrect receiving and processing of the data signal due to the fact that a beam corresponding to a beam signal with a bad quality is used for transmitting the data signal.

In an implementation, the beam signal may be an SSB, the verification signal may be a physical random access channel (PRACH) signal, and the data signal may be a physical uplink shared channel (PUSCH) signal.

The SSB is formed by a combination of a primary synchronization sequence, a secondary synchronization sequence, a physical broadcast channel (PBCH) and a demodulation reference signal (DMRS), that is, a primary synchronization signal (PSS), a secondary synchronization signal (SSS), a PBCH, and a DMRS are received in four consecutive orthogonal frequency division multiplexing (OFDM) symbols to form the SSB, which is mainly used for downlink synchronization, and is the core of 5G New Radio (NR) downlink synchronization.

The PRACH is mainly used for initialization of network access, and realizes uplink timing synchronization for a user (such as a terminal) who does not obtain uplink synchronization or has lost uplink synchronization. In other words, the PRACH is used by the terminal to initiate communication with the base station, and the base station in turn determines, by receiving a PRACH signal, an identity of the access terminal and calculates a latency of the terminal.

As a main uplink data bearer channel of the physical layer, the PUSCH is used for scheduling and transmission of uplink data. A PUSCH signal may carry control information, service information, and the like.

The terminal accesses the base station through the SSB, as well as the PRACH signal and the PUSCH signal, to transmit service information to the base station.

Therefore, the process of the signal transmission method provided in the embodiment of the present disclosure may exemplarily include: transmitting, by the base station, K SSBs in an m^{th} downlink slot, where the K SSBs correspond to beams in different directions. Due to the environment and other factors, the terminal may not receive all the K SSBs, and the received SSBs differ in quality. Therefore, after the terminal receives the SSBs in the downlink slot, two quality conditions, namely a first quality condition and a second quality condition (the first quality condition is higher than the second quality condition, and if the first quality condition is satisfied, the second quality condition is naturally satisfied), and all the received SSBs are assessed to determine the quality of the received SSBs satisfies the first quality condition or the second quality condition. If an SSB B_{m,k} satisfies the first quality condition, the terminal transmits a PRACH signal using a beam corresponding to B_{m,k} in a next uplink slot (assumed to be an *n*^{th} uplink slot), and in an *i*₁^{th} (*i*₁ ≥ 1) uplink slot after the uplink slot in which the PRACH signal is transmitted, that is, in an (*n* + *i*₁)^{th} uplink slot, transmits the PUSCH signal using a beam corresponding to B_{m,k} . If there is no SSB satisfying the first quality condition, but an SSB B_{m,l} not satisfying the first quality condition but satisfying the second quality condition, the terminal transmits a PRACH signal using a beam corresponding to B_{m,l} in a next uplink slot (assumed to be an *n*^{th} uplink slot). Meanwhile, the base station continues to transmit K' SSBs in a first time period, for example, in each of *j* downlink slots following the *m*^{th} downlink slot, where the K' SSBs also correspond to beams in different directions. The K' SSBs may have beam directions the same as or different from the K SSBs transmitted in the m^{th} downlink slot. Likewise, due to the environment and other factors, the terminal may not receive all the K' SSBs, and the received SSBs differ in quality. The terminal continues to assess the received SSBs transmitted from the base station, to judge whether the quality of each SSB satisfies the first quality condition. If there is no SSB B_{m,*k'*} satisfying the first quality condition in the SSBs transmitted in the *j* downlink slots after the *m*^{th} downlink slot, the terminal transmits a PUSCH signal using a beam corresponding to B_{m,l} in a next uplink slot, i.e., an (*n* + *i*₂)^{th} uplink slot (*i*₂ > 1). If there is an SSB B_{m,*k'*} satisfying the first quality condition in the SSBs transmitted in the *j* downlink slots after the *m*^{th} downlink slot, the terminal transmits a PRACH signal using a beam corresponding to B_{m,*k'*} in a next uplink slot, i.e., an (*n* + *i*₃)^{th} uplink slot (*i*₃ ≥ 1), and in an *i*₄^{th} (*i*₄ ≥ 1) uplink slot after the uplink slot in which the PRACH signal is transmitted, that is, in an (*n* + *i*₃ + *i*₄)^{th} uplink slot, transmits the PUSCH signal using a beam corresponding to B_{m,*k'*}.

In an implementation, the first quality condition may be that a reference signal receiving power of the beam signal is greater than a preset first threshold.

After receiving the beam signal, the terminal calculates a reference signal receiving power (RSRP) of the received beam signal. The RSRP is an average of signal powers received on all resource elements (REs) carrying reference signals in a certain symbol, and is a key parameter that can represent a wireless signal strength in a long term evolution (LTE) network. The RSRP of the beam signal may be used to determine the strength of a beam signal, and the higher the strength of the beam signal, the better the quality of the beam signal, and the better the quality of the corresponding beam.

If the RSRP of the beam signal is greater than the preset first threshold, it indicates that the strength of the beam signal is high enough to satisfy the requirement of the terminal for transmitting the data signal, and therefore, the beam signal may be set as the first beam signal.

Similarly, the second quality condition is that a reference signal receiving power of the beam signal is greater than a preset second threshold, where the second threshold is lower than the first threshold.

If the RSRP of the beam signal is less than the preset first threshold but greater than the second threshold, it indicates that the data signal transmitted by the beam corresponding to the beam signal can be received by the base station, but is not an optimal choice, and in the case of no better choice, the data signal may be transmitted by the beam corresponding to that beam signal.

Apparently, other values that can represent the quality of the beam signal may be used, such as a signal to interference plus noise ratio (SINR), or the like.

In an implementation, the first time period may be one slot in which the base station transmitting beam signals.

That is, after the terminal transmits the verification signal to the base station using the second beam, the base station still transmits beam signals in different directions in a next slot after the slot in which the second beam is transmitted, while the terminal continuously receives beam signals transmitted from the base station. If there is a beam signal (i.e., the first beam signal) satisfying the first quality condition in the beam signals transmitted in that slot, the verification signal and the data signal are transmitted to the base station using the beam (i.e., the first beam) corresponding to the first beam signal. If there is no first beam signal satisfying the first quality condition in the beam signals transmitted in that slot, the data signal is further transmitted to the base station using the second beam.

The terminal may select the beam for transmitting the data signal at the latest within a first time period after receiving the beam signals transmitted from the base station for the first time. In other words, the latency for the user is at most the first time period, and the first time period being one slot is a latency acceptable for the user.

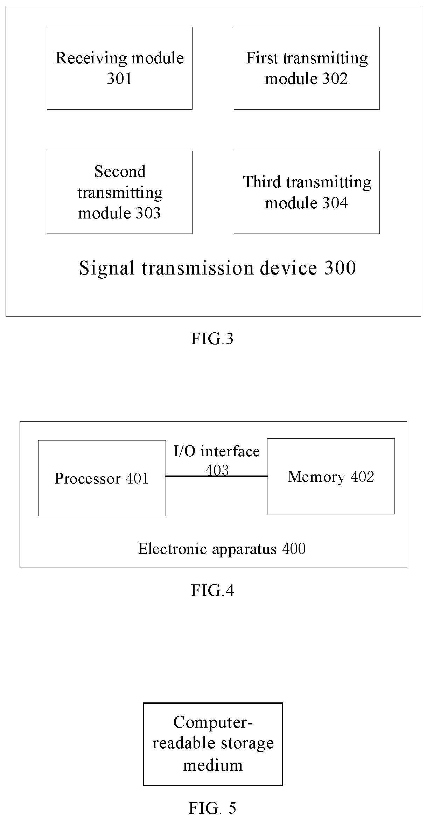

An embodiment of the present disclosure further provides a signal transmission device, which may be a terminal or may be applied to a terminal. Referring to FIG. 3, a block diagram illustrating a signal transmission device according to an embodiment of the present disclosure is shown. The signal transmission device 300 may include: a receiving module 301 configured to receive at least one beam signal from a base station, where each beam signal corresponds to a beam; a first transmitting module 302 configured to transmit, in response to a first beam signal with a quality satisfying a first quality condition included in the received beam signal, a verification signal and a data signal to the base station using a first beam corresponding to the first beam signal, where the verification signal is used by the base station to verify an identity of a terminal; a second transmitting module 303 configured to select, in response to no first beam signal with a quality satisfying the first quality condition included in the received beam signal, a second beam signal from the received beam signal, and transmit the verification signal to the base station using a second beam corresponding to the second beam signal; and a third transmitting module 304 configured to transmit, in response to receiving the first beam signal with a quality satisfying the first quality condition during a first time period after the verification signal is transmitted to the base station using the second beam corresponding to the second beam signal, the verification signal and the data signal to the base station using the first beam corresponding to the first beam signal; and transmit, in response to not receiving the first beam signal with a quality satisfying the first quality condition during the first time period, the data signal to the base station using the second beam corresponding to the second beam signal.

According to the signal transmission device provided in the embodiments of the present disclosure, when a beam signal transmitted from the base station is received, the quality of the beam is assessed through the beam signal. If there is a beam with a better quality now, the verification signal and the data signal are directly transmitted using the beam. If there is no beam with a better quality now, the verification signal is firstly transmitted to the base station using other beams, and the terminal further receives beam signals transmitted from the base station within a certain time period, while judging whether there is a beam with a better quality in the beams corresponding to the newly received beam signals. If there is a beam with a better quality, the verification signal and the data signal are transmitted using that beam with a better quality, and if there is no beam with a better quality, the data signal is continued to be transmitted to the base station using the previous beam without transmitting the verification signal. Therefore, when a better beam is present at the beginning, the beam with a better quality is directly selected to transmit the verification signal and the data signal, and the data signal is transmitted with a good quality and no latency. When no better beam is present at the beginning, the verification signal is firstly transmitted using a beam with a second best quality in the currently received beams. If a beam with a better quality is received in a short time, the beam with the better quality is directly used, and the data signal is transmitted with a good quality and a short latency. If there is no beam with a better quality for a short time, the data signal is further transmitted using the beam with a second best quality, which corresponds to selecting to transmit the data signal using the beam with the best quality under the condition of a short latency.

An embodiment of the present disclosure further provides an electronic apparatus. Referring to FIG. 4, a block diagram illustrating an electronic apparatus according to an embodiment of the present disclosure is shown. The electronic apparatus 400 includes: one or more processors 401; a memory 402 having one or more programs stored thereon which, when executed by the one or more processors 401, cause the one or more processors 401 to implement at least one operation of the signal transmission method as described above; and one or more I/O interfaces 403 connected between the one or more processors 401 and the memory 402, and configured to enable signal interaction between the one or more processors 401 and the memory 402.

The processor 401 is a device with a data processing capability, including but not limited to a central processing unit (CPU), or the like. The memory 402 is a device with a data storage capability, including but not limited to, a random-access memory (RAM, e.g., a synchronous dynamic random access memory (SDRA), a data direction register (DDR) or the like), a read only memory (ROM), an electrically erasable programmable read only memory (EEPROM), or a flash. The I/O interface (read/write interface) 403 is connected between the processor 401 and the memory 402 to enable signal interaction between the memory 402 and the processor 401, and includes, but is not limited to, a bus or the like.

An embodiment of the present disclosure further provides a computer-readable storage medium. Referring to FIG. 5, a block diagram illustrating a computer-readable storage medium according to an embodiment of the present disclosure is shown. The computer-readable storage medium has a computer program stored thereon which, when executed by a processor, causes the processor to implement at least one operation of the signal transmission method as described above.

Those of ordinary skill in the art will appreciate that all or some operations, functional modules/units in the system and device disclosed above may be implemented as software, firmware, hardware, and suitable combinations thereof.

In a hardware implementation, the division between the functional modules/units mentioned in the above description does not necessarily correspond to the division of physical components; for example, one physical component may have multiple functions, or one function or operation may be performed cooperatively by several physical components.

Some or all physical components may be implemented as software executed by a processor, such as a CPU, a DSP or a microprocessor, such as a DSP and an FPGA, or implemented as hardware, or implemented as an integrated circuit, such as an ASIC. Such software may be distributed on a computer-readable medium which may include a computer storage medium (or non-transitory medium) and communication medium (or transitory medium). As is well known to those of ordinary skill in the art, the term computer storage medium includes volatile and nonvolatile, removable and non-removable medium implemented in any method or technology for storing signals, such as computer-readable instructions, data structures, program modules or other data. The computer storage medium includes, but is not limited to, an RAM (more specifically SDRAM, DDR, etc.), an ROM, an EEPROM, a flash or other disk storage; a compact disk read-only memory (CD-ROM), a digital versatile disk (DVD), or other optical disk storage; a magnetic cassette, a magnetic tape, a magnetic disk memory or any other magnetic storage; or any other medium which can be used to store the desired signals and accessed by a computer. Moreover, it is well known to those ordinary skilled in the art that a communication medium typically includes a computer-readable instruction, a data structure, a program module, or other data in a modulated data signal, such as a carrier wave or other transport mechanism, and may include any signal delivery medium.

The present disclosure has disclosed exemplary embodiments, and although specific terms are employed, they are used and should be interpreted merely in a generic and descriptive sense, not for purposes of limitation. As would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present disclosure as set forth in the appended claims.

## Claims

1. A signal transmission method, comprising:
receiving (S101) at least one beam signal from a base station, wherein each of the at least one beam signal corresponds to a respective one beam;
transmitting (S102), in response to a first beam signal with a quality satisfying a first quality condition comprised in the at least one received beam signal, a verification signal and a data signal to the base station using a first beam corresponding to the first beam signal, wherein the verification signal is used by the base station to verify an identity of a terminal;
selecting (S103), in response to no first beam signal with the quality satisfying the first quality condition comprised in the at least one received beam signal, a second beam signal from the at least one received beam signal, and transmitting (S103) the verification signal to the base station using a second beam corresponding to the second beam signal; and
transmitting (S104), in response to receiving the first beam signal with the quality satisfying the first quality condition during a first time period after the verification signal is transmitted to the base station using the second beam corresponding to the second beam signal, the verification signal and the data signal to the base station using the first beam corresponding to the first beam signal; and transmitting (S104), in response to not receiving the first beam signal with the quality satisfying the first quality condition during the first time period after the verification signal is transmitted to the base station using the second beam corresponding to the second beam signal, the data signal to the base station using the second beam corresponding to the second beam signal.

2. The method according to claim 1, wherein selecting (S103) the second beam signal from the at least one received beam signal comprises:
selecting, from the at least one received beam signal, a beam signal with the best quality as the second beam signal.

3. The method according to claim 1, wherein selecting (S103) the second beam signal from the at least one received beam signal comprises:
selecting, from the at least one received beam signal, the second beam signal with a quality satisfying a second quality condition which is lower than the first quality condition.

4. The method according to claim 3, wherein selecting, from the at least one received beam signal, the second beam signal with the quality satisfying the second quality condition comprises:
stopping signal transmission in response to no second beam signal satisfying the second quality condition in the at least one received beam signal.

5. The method according to claim 1, wherein the beam signal is a synchronization signal and physical broadcast channel, PBCH, block, SSB, the verification signal is a physical random access channel, PRACH, signal, and the data signal is a physical uplink shared channel, PUSCH, signal.

6. The method according to any one of claims 1 to 5, wherein the first quality condition is that a reference signal receiving power of the beam signal is greater than a preset first threshold.

7. The method according to any one of claims 1 to 5, wherein the first time period is one slot in which the base station transmitting the beam signal.

8. A signal transmission device (300), comprising:
a receiving module (301) configured to receive at least one beam signal from a base station, wherein each of the at least one beam signal corresponds to a respective one beam;
a first transmitting module (302) configured to transmit, in response to a first beam signal with a quality satisfying a first quality condition comprised in the at least one received beam signal, a verification signal and a data signal to the base station using a first beam corresponding to the first beam signal, wherein the verification signal is used by the base station to verify an identity of a terminal;
a second transmitting module (303) configured to select, in response to no first beam signal with the quality satisfying the first quality condition comprised in the at least one received beam signal, a second beam signal from the at least one received beam signal, and transmit the verification signal to the base station using a second beam corresponding to the second beam signal; and
a third transmitting module (304) configured to transmit, in response to receiving the first beam signal with the quality satisfying the first quality condition during a first time period after the verification signal is transmitted to the base station using the second beam corresponding to the second beam signal, the verification signal and the data signal to the base station using the first beam corresponding to the first beam signal; and transmit, in response to not receiving the first beam signal with the quality satisfying the first quality condition during the first time period after the verification signal is transmitted to the base station using the second beam corresponding to the second beam signal, the data signal to the base station using the second beam corresponding to the second beam signal.

9. An electronic apparatus (400), comprising:
one or more processors (401);
a memory (402) having one or more programs stored thereon which, when executed by the one or more processors (401), cause the one or more processors (401) to implement the signal transmission method according to any one of claims 1 to 7, and
one or more I/O interfaces (403) connected between the one or more processors (401) and the memory (402), and configured to enable signal interaction between the one or more processors (401) and the memory (402).

10. A computer-readable storage medium having a computer program stored thereon which, when executed by a processor, causes the processor to implement the signal transmission method according to any one of claims 1 to 7.

## Patentansprüche

1. Signalübertragungsverfahren, umfassend:
Empfangen (S101) mindestens eines Strahlsignals von einer Basisstation, wobei jedes des mindestens einen Strahlsignals einem jeweiligen Strahl entspricht;
Übertragen (S102), als Reaktion auf ein erstes Strahlsignal mit einer Qualität, die eine erste Qualitätsbedingung erfüllt, die in dem mindestens einen empfangenen Strahlsignal enthalten ist, eines Verifizierungssignals und eines Datensignals an die Basisstation unter Verwenden eines ersten Strahls, der dem ersten Strahlsignal entspricht, wobei das Verifizierungssignal von der Basisstation verwendet wird, um eine Identität eines Endgeräts zu verifizieren;
Auswählen (S103), als Reaktion auf kein erstes Strahlsignal mit der Qualität, die die erste Qualitätsbedingung erfüllt, die in dem mindestens einen empfangenen Strahlsignal enthalten ist, eines zweiten Strahlsignals aus dem mindestens einen empfangenen Strahlsignal, und Übertragen (S103) des Verifizierungssignals an die Basisstation unter Verwenden eines zweiten Strahls, der dem zweiten Strahlsignal entspricht; und
Übertragen (S104), als Reaktion auf das Empfangen des ersten Strahlsignals mit der Qualität, die die erste Qualitätsbedingung erfüllt, während einer ersten Zeitspanne, nachdem das Verifizierungssignal an die Basisstation unter Verwenden des zweiten Strahls, der dem zweiten Strahlsignal entspricht, übertragen wurde, des Verifizierungssignals und des Datensignals an die Basisstation unter Verwenden des ersten Strahls, der dem ersten Strahlsignal entspricht; und Übertragen (S104), als Reaktion auf das Nichtempfangen des ersten Strahlsignals mit der Qualität, die die erste Qualitätsbedingung erfüllt, während der ersten Zeitspanne, nachdem das Verifizierungssignal an die Basisstation unter Verwenden des zweiten Strahls, der dem zweiten Strahlsignal entspricht, übertragen wurde, des Datensignals an die Basisstation unter Verwenden des zweiten Strahls, der dem zweiten Strahlsignal entspricht.

2. Verfahren nach Anspruch 1, wobei das Auswählen (S103) des zweiten Strahlsignals aus dem mindestens einen empfangenen Strahlsignal umfasst:
Auswählen, aus dem mindestens einen empfangenen Strahlsignal, eines Strahlsignals mit der besten Qualität als das zweite Strahlsignal.

3. Verfahren nach Anspruch 1, wobei das Auswählen (S103) des zweiten Strahlsignals aus dem mindestens einen empfangenen Strahlsignal umfasst:
Auswählen, aus dem mindestens einen empfangenen Strahlsignal, des zweiten Strahlsignals mit einer Qualität, die eine zweite Qualitätsbedingung erfüllt, die niedriger als die erste Qualitätsbedingung ist.

4. Verfahren nach Anspruch 3, wobei das Auswählen, aus dem mindestens einen empfangenen Strahlsignal, des zweiten Strahlsignals mit der Qualität, die die zweite Qualitätsbedingung erfüllt, umfasst:
Stoppen der Signalübertragung als Reaktion darauf, dass kein zweites Strahlsignal die zweite Qualitätsbedingung in dem mindestens einen empfangenen Strahlsignal erfüllt.

5. Verfahren nach Anspruch 1, wobei das Strahlsignal ein Synchronisationssignal und ein physikalischer Rundfunkkanal-(PBCH-)Block (SSB) ist, das Verifizierungssignal ein physikalisches Direktzugriffskanal-(PRACH-)Signal ist und das Datensignal ein gemeinsames physikalisches Uplink-Kanal-(PUSCH-)Signal ist.

6. Verfahren nach einem der Ansprüche 1 bis 5, wobei die erste Qualitätsbedingung darin besteht, dass eine Referenzsignalempfangsleistung des Strahlsignals größer als ein voreingestellter erster Schwellenwert ist.

7. Verfahren nach einem der Ansprüche 1 bis 5, wobei die erste Zeitspanne ein Schlitz ist, in dem die Basisstation das Strahlsignal überträgt.

8. Signalübertragungsvorrichtung (300), umfassend:
ein Empfangsmodul (301), das konfiguriert ist, mindestens ein Strahlsignal von einer Basisstation zu empfangen, wobei jedes des mindestens einen Strahlsignals einem jeweiligen Strahl entspricht;
ein erstes Übertragungsmodul (302), das konfiguriert ist, als Reaktion auf ein erstes Strahlsignal mit einer Qualität, die eine erste Qualitätsbedingung erfüllt, die in dem mindestens einen empfangenen Strahlsignal enthalten ist, ein Verifizierungssignal und ein Datensignal an die Basisstation unter Verwenden eines ersten Strahls, der dem ersten Strahlsignal entspricht, zu übertragen, wobei das Verifizierungssignal von der Basisstation verwendet wird, um eine Identität eines Endgeräts zu verifizieren;
ein zweites Übertragungsmodul (303), das konfiguriert ist, als Reaktion auf kein erstes Strahlsignal mit der Qualität, die die erste Qualitätsbedingung erfüllt, die in dem mindestens einen empfangenen Strahlsignal enthalten ist, ein zweites Strahlsignal aus dem mindestens einen empfangenen Strahlsignal auszuwählen und das Verifizierungssignal an die Basisstation unter Verwenden eines zweiten Strahls, der dem zweiten Strahlsignal entspricht, zu übertragen; und
ein drittes Übertragungsmodul (304), das konfiguriert ist, als Reaktion auf das Empfangen des ersten Strahlsignals mit der Qualität, die die erste Qualitätsbedingung erfüllt, während einer ersten Zeitspanne, nachdem das Verifizierungssignal an die Basisstation unter Verwenden des zweiten Strahls, der dem zweiten Strahlsignal entspricht, übertragen wurde, das Verifizierungssignal und das Datensignal an die Basisstation unter Verwenden des ersten Strahls, der dem ersten Strahlsignal entspricht, zu übertragen; und als Reaktion auf das Nichtempfangen des ersten Strahlsignals mit der Qualität, die die erste Qualitätsbedingung erfüllt, während der ersten Zeitspanne, nachdem das Verifizierungssignal an die Basisstation unter Verwenden des zweiten Strahls, der dem zweiten Strahlsignal entspricht, übertragen wurde, das Datensignal an die Basisstation unter Verwenden des zweiten Strahls, der dem zweiten Strahlsignal entspricht, zu übertragen.

9. Elektronische Vorrichtung (400), umfassend:
einen oder mehrere Prozessoren (401);
einen Speicher (402) mit einem oder mehreren darauf gespeicherten Programmen, die, wenn sie von dem einen oder den mehreren Prozessoren (401) ausgeführt werden, den einen oder die mehreren Prozessoren (401) veranlassen, das Signalübertragungsverfahren nach einem der Ansprüche 1 bis 7 zu implementieren, und
eine oder mehrere E/A-Schnittstellen (403), die zwischen dem einen oder den mehreren Prozessoren (401) und dem Speicher (402) verbunden sind und konfiguriert sind, eine Signalinteraktion zwischen dem einen oder den mehreren Prozessoren (401) und dem Speicher (402) zu ermöglichen.

10. Computerlesbares Speichermedium mit einem darauf gespeicherten Computerprogramm, das, wenn es von einem Prozessor ausgeführt wird, den Prozessor veranlasst, das Signalübertragungsverfahren nach einem der Ansprüche 1 bis 7 zu implementieren.

## Revendications

1. Procédé de transmission de signal, comprenant :
recevoir (S101) au moins un signal de faisceau en provenance d'une station de base, dans lequel chacun de l'au moins un signal de faisceau correspond à un faisceau respectif ;
envoyer (S102), en réponse à un premier signal de faisceau avec une qualité satisfaisant une première condition de qualité comprise dans l'au moins un signal de faisceau reçu, un signal de vérification et un signal de données à la station de base en utilisant un premier faisceau correspondant au premier signal de faisceau, dans lequel le signal de vérification est utilisé par la station de base pour vérifier une identité d'un terminal ;
sélectionner (S103), en réponse à aucun premier signal de faisceau avec la qualité satisfaisant la première condition de qualité comprise dans l'au moins un signal de faisceau reçu, un second signal de faisceau à partir de l'au moins un signal de faisceau reçu, et envoyer (S103) le signal de vérification à la station de base en utilisant un second faisceau correspondant au second signal de faisceau ; et
envoyer (S104), en réponse à la réception du premier signal de faisceau avec la qualité satisfaisant la première condition de qualité pendant une première période de temps après que le signal de vérification est envoyé à la station de base en utilisant le second faisceau correspondant au second signal de faisceau, le signal de vérification et le signal de données à la station de base en utilisant le premier faisceau correspondant au premier signal de faisceau ; et envoyer (S104), en réponse à la non-réception du premier signal de faisceau avec la qualité satisfaisant la première condition de qualité pendant la première période de temps après que le signal de vérification est envoyé à la station de base en utilisant le second faisceau correspondant au second signal de faisceau, le signal de données à la station de base en utilisant le second faisceau correspondant au second signal de faisceau.

2. Procédé selon la revendication 1, dans lequel sélectionner (S103) le second signal de faisceau à partir de l'au moins un signal de faisceau reçu comprend :
sélectionner, à partir de l'au moins un signal de faisceau reçu, un signal de faisceau avec la meilleure qualité en tant que second signal de faisceau.

3. Procédé selon la revendication 1, dans lequel sélectionner (S103) le second signal de faisceau à partir de l'au moins un signal de faisceau reçu comprend :
sélectionner, à partir de l'au moins un signal de faisceau reçu, le second signal de faisceau avec une qualité satisfaisant une seconde condition de qualité qui est inférieure à la première condition de qualité.

4. Procédé selon la revendication 3, dans lequel sélectionner, à partir de l'au moins un signal de faisceau reçu, le second signal de faisceau avec la qualité satisfaisant la seconde condition de qualité comprend :
arrêter la transmission de signal en réponse à l'absence de second signal de faisceau satisfaisant la seconde condition de qualité dans l'au moins un signal de faisceau reçu.

5. Procédé selon la revendication 1, dans lequel le signal de faisceau est un signal de synchronisation et un bloc de canal de diffusion physique, PBCH, SSB, le signal de vérification est un signal de canal d'accès aléatoire physique, PRACH, et le signal de données est un signal de canal partagé de liaison montante physique, PUSCH.

6. Procédé selon l'une quelconque des revendications 1 à 5, dans lequel la première condition de qualité est qu'une puissance de réception de signal de référence du signal de faisceau est supérieure à un premier seuil prédéfini.

7. Procédé selon l'une quelconque des revendications 1 à 5, dans lequel la première période de temps est un intervalle dans lequel la station de base envoie le signal de faisceau.

8. Dispositif de transmission de signal (300), comprenant :
un module de réception (301) configuré pour recevoir au moins un signal de faisceau en provenance d'une station de base, dans lequel chacun de l'au moins un signal de faisceau correspond à un faisceau respectif ;
un premier module de transmission (302) configuré pour envoyer, en réponse à un premier signal de faisceau avec une qualité satisfaisant une première condition de qualité comprise dans l'au moins un signal de faisceau reçu, un signal de vérification et un signal de données à la station de base en utilisant un premier faisceau correspondant au premier signal de faisceau, dans lequel le signal de vérification est utilisé par la station de base pour vérifier une identité d'un terminal ;
un deuxième module de transmission (303) configuré pour sélectionner, en réponse à aucun premier signal de faisceau avec la qualité satisfaisant la première condition de qualité comprise dans l'au moins un signal de faisceau reçu, un second signal de faisceau à partir de l'au moins un signal de faisceau reçu, et envoyer le signal de vérification à la station de base en utilisant un second faisceau correspondant au second signal de faisceau ; et
un troisième module de transmission (304) configuré pour envoyer, en réponse à la réception du premier signal de faisceau avec la qualité satisfaisant la première condition de qualité pendant une première période de temps après que le signal de vérification est envoyé à la station de base en utilisant le second faisceau correspondant au second signal de faisceau, le signal de vérification et le signal de données à la station de base en utilisant le premier faisceau correspondant au premier signal de faisceau ; et envoyer, en réponse à la non-réception du premier signal de faisceau avec la qualité satisfaisant la première condition de qualité pendant la première période de temps après que le signal de vérification est envoyé à la station de base en utilisant le second faisceau correspondant au second signal de faisceau, le signal de données à la station de base en utilisant le second faisceau correspondant au second signal de faisceau.

9. Appareil électronique (400), comprenant :
un ou plusieurs processeurs (401) ;
une mémoire (402) ayant un ou plusieurs programmes stockés sur celle-ci qui, lorsqu'ils sont exécutés par les un ou plusieurs processeurs (401), amènent les un ou plusieurs processeurs (401) à mettre en oeuvre le procédé de transmission de signal selon l'une quelconque des revendications 1 à 7, et
une ou plusieurs interfaces E/S (403) connectées entre les un ou plusieurs processeurs (401) et la mémoire (402), et configurées pour permettre une interaction de signal entre les un ou plusieurs processeurs (401) et la mémoire (402).

10. Moyen de stockage lisible par ordinateur ayant un programme informatique stocké sur celui-ci qui, lorsqu'il est exécuté par un processeur, amène le processeur à mettre en oeuvre le procédé de transmission de signal selon l'une quelconque des revendications 1 à 7.
